# EUROPÄISCHE PATENTSCHRIFT

(11) **EP 3 737 935 B1**
(45) Veröffentlichungstag und Bekanntmachung des Hinweises auf die Patenterteilung: **08.12.2021**
(21) Anmeldenummer: 18826637.3
(22) Anmeldetag: 19.12.2018
(51) Int. Cl.: G01N 23/00, G01T 7/00, G21G 1/02

(54) **TARGETPLATTFORM ZUR VERARBEITUNG VON BESTRAHLTEN TARGETS AUS EINEM KERNREAKTOR**
TARGET PLATFORM FOR THE PROCESSING OF IRRADIATED TARGETS FROM A NUCLEAR REACTOR
PLATEFORME DE CIBLES POUR LE TRAITEMENT DE CIBLES IRRADIÉES PROVENANT D'UN RÉACTEUR NUCLÉAIRE

(30) Priorität: 08.01.2018 DE 102018100228
(43) Veröffentlichungstag der Anmeldung: 18.11.2020
(73) Patentinhaber: Framatome GmbH, 91052 Erlangen (DE)
(72) Erfinder: RICHTER, Thomas Fabian, 91052 Erlangen (DE); RAUPACH, Carina, 91052 Erlangen (DE)
(74) Vertreter: Lavoix
(86) Internationale Anmeldenummer: PCT/EP2018/085883
(87) Internationale Veröffentlichungsnummer: WO 2019/134833

(56) Entgegenhaltungen:
- FR-A- 1 466 882
- US-A- 3 855 473
- US-A- 4 582 990

## Beschreibung

Die vorliegende Erfindung betrifft eine Targetplattform zur Verarbeitung von bestrahlten Targets aus einem Kernreaktor, insbesondere einen Messtisch mit einer Vorrichtung zum Kalibrieren mindestens eines Strahlungsdetektors eines Kugelmesssystems, oder eine Targetplattform eines Nuklidaktivierungssystems.

Ein Kugelmesssystem kann ein Teil der nuklearen Instrumentierung in Kernreaktoren sein. Das Kugelmesssystem dient beispielsweise zur Messung der Neutronenflussverteilung im Reaktorkern.

An mehreren Stellen des Kerns ragen vertikale Rohre in den Kern hinein. Mithilfe eines Treibmittels, bevorzugt Druckgas, werden vanadiumhaltige Stahlkugeln in die Rohre transportiert. Die Stahlkugeln verbleiben einige Minuten, werden von den Neutronen aktiviert und dann mit dem Treibmittel in eine Messposition auf einer Targetplattform außerhalb des Kerns transportiert. Dort wird die Aktivität der Stahlkugeln mit einem oder mehreren Strahlungsdetektoren gemessen.

Ein Nuklidaktivierungssystem zur Erzeugung von medizinisch nutzbaren Radionukliden in einem Kernreaktor ist aus der WO 2016/128022 A1 bekannt. Das System umfasst eine oder mehrere Rohrleitungen, mit denen Bestrahlungstargets aus Radionuklidvorläufern während des Leistungsbetriebs des Kernreaktors in mindestens einen in den Reaktorkern ragenden Instrumentierungsfinger eingebracht und aus dem Intstrumentierungsfinger entfernt werden können. Ferner ist ein vorzugsweise pneumatisches Antriebssystem für die Bestrahlungstargets vorgesehen, mit dessen Hilfe die Bestrahlungstargets in dem Rohrleitungssystem und dem Instrumentierungsfinger transportiert werden können. Das Nuklidaktivierungssystem kann ferner eine Mess- und Steuereinheit umfassen, die mit einem Online-Kernüberwachungssystem verbunden und konfiguriert ist, um eine optimale Bestrahlungszeit für die Bestrahlungstargets basierend auf dem tatsächlichen Zustand des Reaktors zu berechnen, wie er durch das Online-Kernüberwachungssystem bereitgestellt wird. Der Instrumentierungsfinger und die Rohrleitungen können an eine Targetplattform angeschlossen sein, auf der die Aktivität der im Reaktorkern bestrahlten Targets mit einem oder mehreren Strahlungsdetektoren ausgemessen werden kann, analog zur Aktivitätsmessung der Stahlkugeln aus dem Kugelmesssystem. Die bestrahlten Targets können insbesondere für medizinische Strahlentherapien verwendet werden.

Aus der DE 10 2010 051 062 A1 ist eine Detektoranordnung für ein Kugelmesssystem in einer kerntechnischen Anlage bekannt. Die Detektoranordnung weist einen Detektionsbereich, eine Messplattform, mehrere auf der Messplattform angeordneten Detektoren und eine Steuereinheit auf, wobei die Messplattform bezüglich des Detektionsbereiches beabstandet angeordnet und relativ zu dem Detektionsbereich verschiebbar gelagert ist. Zur Kalibrierung können die Detektoren in eine Eichposition in einem Bereich außerhalb des Detektionsbereiches verschoben werden.

Die Strahlungsdetektoren des Kugelmesssystems und/oder des Nuklidaktivierungssystems müssen alle 12 bis 24 Monate kalibriert werden. Dazu muss jeder einzelne Detektor von Hand aus der Messplattform entfernt, auf einer Kalibrierquelle platziert und gemessen werden. Diese Arbeit dauert 2-3 Tage und muss von zwei Personen ausgeführt werden, die der Gammastrahlung der Kalibrierquelle und des Messraums ausgesetzt sind. Alternativ müssen alle Detektoren nacheinander über eine feste Kalibrierquelle bewegt werden.

Es ist daher eine Aufgabe der vorliegenden Erfindung, ein Kalibriersystem vorzusehen, das eine Verkürzung der Arbeitszeit in den Messräumen des Kernreaktors, insbesondere innerhalb der Reaktorschutzumhausung, und der Strahlenexposition des Personals im Raum und an der Kalibrierquelle ermöglicht. Eine mögliche Automatisierung kann sogar eine Begehung vor Ort überflüssig machen.

Diese Aufgabe wird erfindungsgemäß gelöst durch eine Targetplattform zur Verarbeitung von bestrahlten Targets aus einem Kernreaktor, umfassend mindestens eine Targetröhre, die sich entlang der Targetplattform erstreckt und die ausgebildet ist, um die Targets aufzunehmen, eine Detektoranordnung mit einem oder mehreren Strahlungsdetektoren, die über der Targetröhre angeordnet sind, und eine Kalibriervorrichtung zur Kalibrierung der Strahlungsdetektoren in der Detektoranordnung, wobei die Kalibriervorrichtung ein Führungselement umfasst, das in der Targetplattform nahe der mindestens einen Targetröhre angeordnet ist und ferner mindestens eine an einem Positionierelement angebrachte Strahlungsquelle umfasst, wobei die Strahlungsquelle derart ausgebildet ist, dass sie mittels des Positionierelements entlang dem Führungselement beweglich ist, um die Strahlungsquelle unterhalb jedes der Strahlungsdetektoren zu positionieren.

Mit der erfindungsgemäßen Targetplattform kann eine sichere und zeitsparende Kalibrierung der Strahlungsdetektoren eines Kugelmesssystems oder Nuklidaktivierungssystems durchgeführt werden, während sich die Strahlungsdetektoren in der Detektoranordnung befinden. Die Strahlungsdetektoren können dabei in ihrer Position an der Targetplattform verbleiben. Der Bediener wird nicht mehr der Strahlung einer Kalibrierquelle ausgesetzt, wenn er jeden Detektor über der Kalibrierquelle positioniert. Durch eine mögliche Automatisierung des neuen Prozesses kann das Betreten des Messraumes für die Kalibrierung komplett entfallen. Außerdem wird es durch die erfindungsgemäße Targetplattform ermöglicht, die Kalibrierintervalle zu verkürzen, wodurch die Genauigkeit der Messung erhöht werden kann.

Soweit im Folgenden die Targetplattform eines Kugelmesssystems für einen Kernreaktor beschrieben wird, können die Targetplattform auch als Messtisch und die Bestrahlungstargets auch als Messkugeln bezeichnet werden. Die Targetröhre wird dann entsprechend als Messröhre bezeichnet. Die Erfindung soll jedoch nicht auf ein Kugelmesssystem beschränkt sein, sondern gleichermaßen auch die Targetplattform in einem Nuklidaktivierungssystem umfassen.

Das Positionierelement kann ein Führungsdraht sein, welcher Markierungen aufweisen kann, um die Strahlungsquelle in einer definierten Position anzuordnen. Mittels des Positionierelements, insbesondere des Führungsdrahtes, kann die Strahlungsquelle in dem Führungselement durch Ziehen oder Schieben bewegt werden, um die Strahlungsquelle in eine Messposition unter einen Strahlungsdetektor zu bringen. Zu diesem Zweck ist der Führungsdraht ausreichend stabil ausgebildet, insbesondere so stabil, dass ein Schieben der Strahlungsquelle möglich ist. Die Markierungen können anzeigen, ob sich die Strahlungsquelle in einer Messposition befindet, in der eine Kalibrierung eines Strahlungsdetektors möglich ist. Der Begriff "Führungsdraht" umfasst auch Positionierelemente, welche als Kette oder Seil ausgebildet sind.

Alternativ oder zusätzlich zu den Markierungen am Führungsdraht kann der Targetplattform ein Stoppelement aufweisen, welches derart angeordnet werden kann, dass die Strahlungsquelle am Stoppelement anstößt. Auf diese Weise kann die Strahlungsquelle ebenfalls in eine Messposition gebracht werden. Das Stoppelement ist beispielsweise ein Anschlagsstift, der in die Targetplattform eingesetzt werden kann.

Gemäß einer Ausführungsform kann die Strahlungsquelle eine Bohrung aufweisen, um die Strahlungsquelle in einer Messposition zu fixieren. In diese Bohrung kann ein Positionierstift eingeführt werden, um die Strahlungsquelle in einer definierten Position, insbesondere in einer Messposition, zu fixieren. Die Targetplattform weist zu diesem Zweck vorzugsweise entsprechende Bohrungen auf, durch die der Positionierstift oder der Anschlagsstift zumindest teilweise in eine Bewegungsbahn der Strahlungsquelle hineinragt.

Das Führungselement ist vorzugsweise ein Führungsrohr. Die Strahlungsquelle kann in dem Führungsrohr besonders einfach aufgenommen und geführt werden.

Um ein ungewünschtes Verdrehen der Strahlungsquelle zu verhindern, kann das Führungselement eine Führungsnut aufweisen. Die Strahlungsquelle kann ein entsprechendes Gegenelement aufweisen, das in die Führungsnut eingreift und in dieser geführt ist, sodass sich die Strahlungsquelle nicht verdrehen kann. Insbesondere ist die Strahlungsquelle verdrehsicher geführt. Auf diese Weise kann eine zuverlässige und genaue Kalibrierung des Strahlendetektors erfolgen.

Gemäß einer Ausführungsform hat das Führungsrohr einen runden oder polygonalen, bevorzugt rechteckigen Querschnitt. Ein polygonaler und bevorzugt rechteckiger Querschnitt kann an sich schon ein Verdrehen der Strahlungsquelle verhindern, ohne dass eine Führungsnut notwendig ist. Allerdings muss die Strahlungsquelle in diesem Fall entsprechend geformt sein, beispielsweise ebenfalls einen rechteckigen Querschnitt aufweisen, sodass ein Verdrehen der Strahlungsquelle in dem Führungsrohr zuverlässig verhindert wird.

Um ein Einführen der Strahlungsquelle in das Führungsrohr zu erleichtern, kann das Führungsrohr eine trichterförmig aufgeweitete Öffnung haben.

Die Strahlungsquelle kann per Hand oder mittels eines Motors bewegbar sein. Wird die Strahlungsquelle per Hand verschoben, ermöglicht dies eine besonders einfache und kostengünstige Herstellung der Targetplattform. Durch die Verwendung eines Motors kann die Kalibrierung jedoch automatisiert werden, was den Kalibrierprozess noch zuverlässiger und sicherer für den Anwender macht. Der Motor ist dabei beispielsweise in der Targetplattform unterhalb der Targetröhren angeordnet. Vorzugsweise wird ein biaxial gesteuertes Fahrsystem verwendet.

Der Führungsdraht kann bevorzugt zusammen mit der Strahlungsquelle auf einer Rolle aufwickelbar sein. Dadurch kann der Führungsdraht mit der Strahlungsquelle während des normalen Betriebs des Kernreaktors platzsparend verstaut werden. Die Rolle kann manuell mit einer Handkurbel oder über einen Motor, beispielsweise einen Schrittmotor, bedienbar sein.

Die Rolle kann fest oder lösbar an der Targetplattform befestigt sein. Beispielsweise ist die Rolle an einer Halterung an einem Ende der Targetplattform befestigt. Je nach Platz im Messraum kann die Rolle permanent oder nur zu Kalibrierzwecken dort befestigt sein. Bei permanenter Befestigung ist die Quelle vorzugsweise in einer Querrichtung der Targetplattform verschiebbar, um alle vorhandenen Strahlungsdetektoren mit derselben Strahlungsquelle kalibrieren zu können. Da die Rolle mit der Strahlungsquelle aufgrund der nötigen Abschirmung ein hohes Gewicht aufweist, kann die Rolle bei einer lösbaren Befestigung auf einem fahrbaren Träger gelagert sein.

Gemäß einer Ausführungsform weist die Targetplattform mindestens eine Umlenkrolle auf. Der Führungsdraht mit der Strahlungsquelle kann über die Umlenkrolle geführt sein. So ergibt sich die Möglichkeit, das Positionierelement, insbesondere den Führungsdraht, nicht nur zu schieben, sondern auch zu ziehen. In diesem Fall kann die Strahlungsquelle weiter hinten im Führungsdraht befestigt sein, was den Vorteil hat, dass sie beim Einführen in die Targetplattform besser abgeschirmt ist. Zusätzlich kann die Targetplattform ein zweites Führungselement, insbesondere Führungsrohr, aufweisen, welches in der Targetplattform unterhalb des ersten Führungselements angeordnet sein kann und in dem der Führungsdraht zurückgeführt werden kann.

Zum Erleichtern des Einführens des Führungsdrahtes kann bereits ein Draht unter der Targetplattform, insbesondere entlang dem Führungselement, angeordnet sein. Dieser kann dann zum Beispiel per Schraubverschluss, an dem Führungsdraht befestigt werden. Dabei kann eine weitere Rolle innerhalb oder neben dem Abschirmbehälter vorgesehen sein, auf die der umgelenkte Draht aufgerollt werden kann. Auch hier ist zum Aufrollen des Drahtes eine Handkurbel oder ein Schrittmotor möglich.

Ein Verfahren zum Kalibrieren mindestens eines Strahlungsdetektors eines Kugelmesssystems und/oder eines Nuklidaktivierungssystems in einem Kernreaktor umfasst die folgenden Schritte:
- Bereitstellung einer Strahlungsquelle, die an einem Positionierelement befestigt ist;
- Einführen der Strahlungsquelle in ein Führungselement in einer Targetplattform, insbesondere in einem Messtisch eines Kugelmesssystems, wobei das Führungselement nahe einer Targetröhre angeordnet ist;
- Bewegen der Strahlungsquelle im Führungselement durch Schieben oder Ziehen des Positionierelements, bis die Strahlungsquelle in einer Messposition angeordnet ist, in welcher der Strahlungsdetektor die Aktivität der Strahlungsquelle detektiert.

Dieses Verfahren kann mittels der vorhergehend beschriebenen Targetplattform ausgeführt werden.

Weitere Vorteile und Merkmale der Erfindung ergeben sich aus der nachfolgenden Beschreibung bevorzugter Ausführungsformen und aus den nachfolgenden Zeichnungen, auf die Bezug genommen wird. In den Zeichnungen zeigen:
- Figur 1 einen erfindungsgemäßen Messtisch eines Kugelmesssystems für einen Kernreaktor,
- Figur 2 schematisch eine beispielhafte Ausführungsform eines Messtisches in einer Schnittdarstellung,
- Figur 3 schematisch einen Schnitt durch einen Strahlungsdetektor in einem erfindungsgemäßen Messtisch,
- Figur 4 schematisch einen erfindungsgemäßen Messtisch in einer Schnittdarstellung,
- Figur 5 schematisch einen Führungsdraht mit einer Strahlungsquelle,
- Figur 6 schematisch einen fahrbaren Träger zur Lagerung einer Rolle zum Aufwickeln eines Führungsdrahtes und
- Figur 7 schematisch eine weitere Ausführungsform eines erfindungsgemäßen Messtisches.

Im Folgenden wird der Kern der Erfindung am Beispiel eines Kugelmesssystems für einen Kernreaktor beschrieben. Die Erfindung ist jedoch nicht auf diese Ausführungsform beschränkt. Insbesondere lässt sich die Erfindung auch auf Nuklidaktivierungssysteme in Kernreaktoren anwenden.

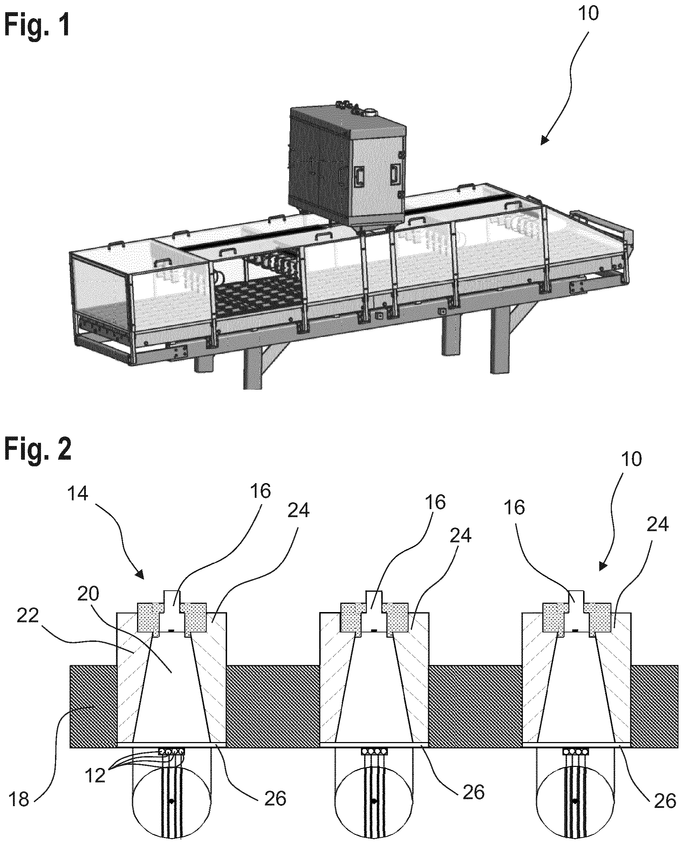

Figur 1 zeigt eine erfindungsgemäße Targetplattform, insbesondere eine als Messtisch 10 für ein Kugelmesssystem eines Kernreaktors ausgebildete Targetplattform.

Der Messtisch 10 ist zweckmäßigerweise in Form eines Rechtecks ausgebildet, wobei parallel zur Längsrichtung des Messtisches 10 Messröhren 12 zurAufnahme von bestrahlten Targets, insbesondere radioaktiv aktivierten Kugeln, angeordnet sind. Die Messröhren 12 sind in Figur 2 zu sehen.

Figur 2 zeigt einen Teilschnitt durch einen beispielhaften Messtisch 10 mit einer Detektoranordnung 14, die mehrere Strahlungsdetektoren 16 aufweist. Die Strahlungsdetektoren 16 sind in einem Bereich über den Messröhren 12 am Ende eines sich verjüngenden Kanals 20 angeordnet, der sich in einem Gehäuse 22 befindet. Der Kanal 20 bildet einen Ausblendkanal. Der Messtisch 10 hat vorzugsweise zehn Messbalken 24 mit jeweils 36 Strahlungsdetektoren 16, wobei die Messbalken 24 in Längsrichtung des Messtisches 10 verlaufen. Der Einfachheit halber sind in Figur 2 jedoch nur drei Messbalken 24 dargestellt, wobei von jedem Messbalken nur der vordere Strahlungsdetektor 16 zu sehen ist. Unter jedem der Messbalken 24 verlaufen jeweils vier Messröhren 12.

Der Messtisch 10 ist zumindest teilweise aus einem Strahlenschutzmaterial 18 ausgebildet.

Zwischen dem Gehäuse 22, insbesondere dem Kanal 20, und den Messröhren 12, ist jeweils eine Stahlscheibe 26 angeordnet.

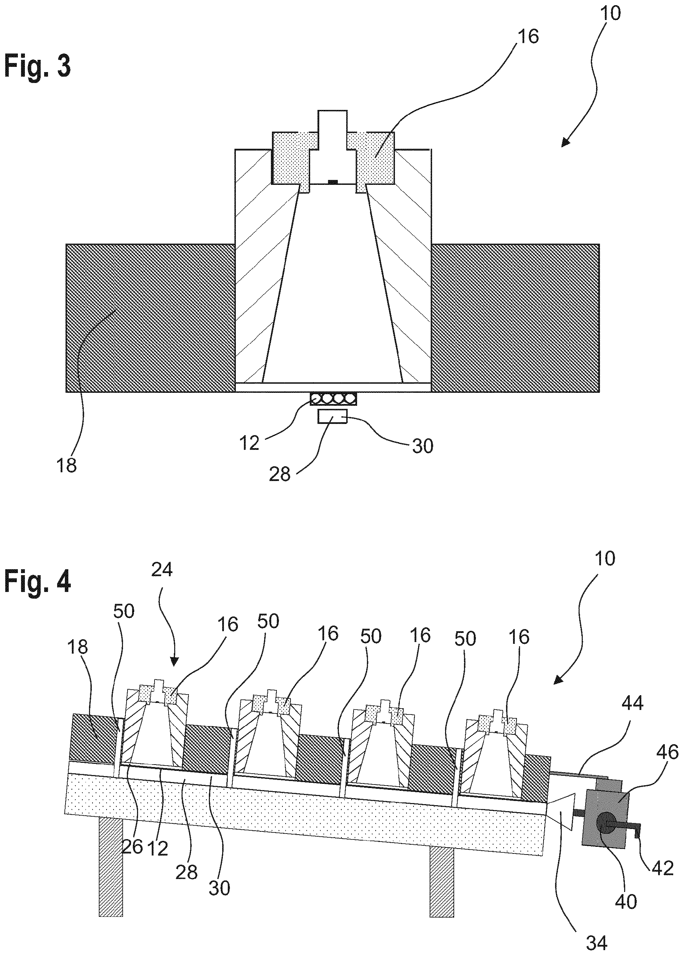

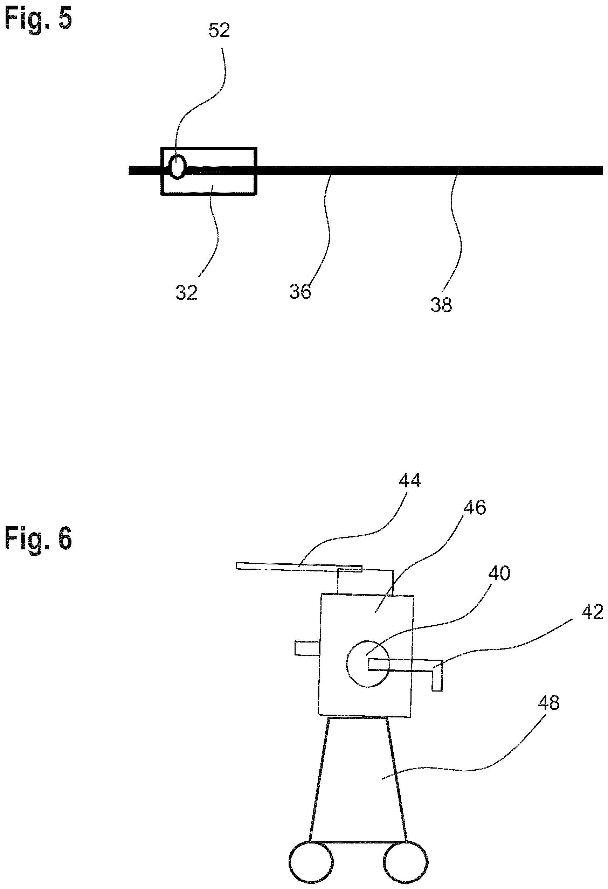

Um die neue Kalibrierungsmethode zu ermöglichen, ist nahe den Messröhren 12, beispielsweise unterhalb oder neben den Messröhren 12, ein Führungselement 28 angeordnet, wie beispielsweise in Figur 3 gezeigt. Das Führungselement 28 ist beispielsweise ein Führungsrohr 30. Entlang dem Führungselement 28, insbesondere in dem Führungsrohr 30, kann eine Strahlungsquelle 32 mit bekannter Aktivität bewegt werden. Die Strahlungsquelle 32 ist in Figur 5 zusammen mit einem Positionierelement 36 schematisch dargestellt.

Das Führungselement 28 und die Strahlungsquelle 32 sind Bestandteil einer Kalibriervorrichtung.

In der in Figur 3 gezeigten Ausführungsform hat das Führungselement 28, insbesondere das Führungsrohr 30, einen rechteckigen Querschnitt. Weist die Strahlungsquelle 32 ein entsprechend rechteckiges Profil auf, kann auf diese Weise ein Verdrehen der Strahlungsquelle 32 in dem Führungsrohr 30 verhindert werden, wodurch der Kalibrierprozess besonders zuverlässig ist. In einer alternativen Ausführungsform kann das Führungsrohr 30 einen anders geformten Querschnitt aufweisen, zum Beispiel einen runden oder schlitzförmigen Querschnitt. Um ein Verdrehen der Strahlungsquelle 32 zuverlässig zu verhindern, kann das Führungselement 28, insbesondere das Führungsrohr 30, eine Führungsnut aufweisen. Die Strahlungsquelle 32 kann in diesem Fall einen entsprechenden Vorsprung aufweisen, der in die Führungsnut eingreift und so ein Verdrehen der Strahlungsquelle verhindert. Alternativ oder zusätzlich kann auch die Strahlungsquelle 32 eine Führungsnut und das Führungselement 28 einen entsprechenden Vorsprung aufweisen.

Figur 4 zeigt schematisch einen Messtisch 10 in einer Schnittdarstellung. Dabei ist ein Messbalken 24 dargestellt, wobei der Einfachheit halber nur vier Strahlungsdetektoren 16 anstatt der eigentlich 36 Strahlungsdetektoren 16 pro Messbalken dargestellt sind. Der Messtisch 10 kann in eine Richtung geneigt sein.

An einem Ende des Messtisches 10, vorzugsweise an dem unteren Ende, hat das Führungsrohr 30 eine trichterförmige Öffnung 34. Diese dient als Einführhilfe für die Strahlungsquelle 32. Das Positionierelement 36 kann ebenfalls eine Einführhilfe aufweisen, beispielsweise eine spitze Stange am Anfang des Führungsdrahtes 38.

Wie in Figur 5 gezeigt ist die Strahlungsquelle 32 an dem Positionierelement 36 befestigt. Das Positionierelement 36 ist als stabiler, passgenauer Führungsdraht 38 ausgebildet. Mittels des Positionierelements 36 kann die Strahlungsquelle 32 unter die zu kalibrierenden Strahlungsdetektoren 16 geschoben werden.

Der Führungsdraht 38 mit der Strahlungsquelle 32 ist, wie in Figur 4 gezeigt, auf einer Rolle 40 aufgewickelt. Die Rolle 40 kann entweder mit einer Handkurbel 42 oder mit einem Motor angetrieben werden, um die Strahlungsquelle 32 in das Führungsrohr 30 zu schieben oder aus diesem herauszuziehen. In den gezeigten Ausführungsformen wird die Rolle manuell über die Handkurbel 42 angetrieben. Alternativ kann die Positionierung der Strahlungsquelle 32 über einen Schrittmotor erfolgen, der die Strahlungsquelle 32 zieht oder schiebt. Der Schrittmotor kann vom Personal vor Ort angesteuert werden.

Denkbar ist auch eine vollautomatische Kalibrierung. Für diese Ausführungsform bietet sich ein biaxial gesteuertes Fahrsystem direkt unterhalb der Messröhren 12 an. Hierfür kann der vorhandene Platz unterhalb des Messtisches 10 genutzt werden.

An einem Ende des Messtisches 10, insbesondere an dem unteren Ende des geneigten Tisches, ist die Rolle 40 über eine Halterung 44 an dem Messtisch 10 befestigt. Zur Abschirmung der Strahlungsquelle 32 ist die Rolle 40 in einem geeigneten Gehäuse 46 gelagert.

Bei der in Figur 4 gezeigten Ausführungsform ist die Rolle 40 permanent am Messtisch 10 befestigt. Je nach Größe des Messraums kann es jedoch erforderlich sein, die Rolle 40 aus dem Messraum zu entfernen, wenn sie nicht benötigt wird. Zu diesem Zweck kann die Rolle 40 auf einem fahrbaren Träger 48 angeordnet sein. Ein solcher Träger 48 ist schematisch zusammen mit einer Rolle 40 in Figur 6 dargestellt. Ein fahrbarer Träger 48 eignet sich in diesem Fall besonders gut, da die Rolle 40 aufgrund der nötigen Abschirmung ein hohes Gewicht aufweist.

Um die Strahlungsquelle 32 in einer definierten Messposition unter den Strahlungsdetektoren 16 positionieren zu können, können in einer Ausführungsform Markierungen an dem Führungsdraht 38 angebracht sein. Anhand der Markierungen kann ein Anwender erkennen, ob er die Strahlungsquelle 32 weit genug in das Führungsrohr 30 geschoben hat und ob sich die Strahlungsquelle 32 in der richtigen Position für eine Kalibrierung befindet.

Alternativ oder zusätzlich können im Messtisch 10 Bohrungen 50 vorgesehen sein, in die ein Stoppelement, beispielsweise ein Anschlagstift, eingeführt werden kann. Soll ein Strahlungsdetektor 16 kalibriert werden, kann neben dem entsprechenden Strahlungsdetektor der Anschlagstift in die Bohrung 50 eingesetzt werden. Die Strahlungsquelle 32 kann dann so weit in das Führungsrohr 30 geschoben werden, bis die Strahlungsquelle 32 an den Anschlagstift anstößt. Die Strahlungsquelle 32 befindet sich dann in einer definierten Messposition.

In einer weiteren Variante kann die Strahlungsquelle 32 mit einer Bohrung 52 versehen sein, über die ein Positionierstift eingeführt werden kann, um die Strahlungsquelle 32 in einer Messposition zu fixieren. Eine solche Bohrung 52 ist in Figur 5 dargestellt.

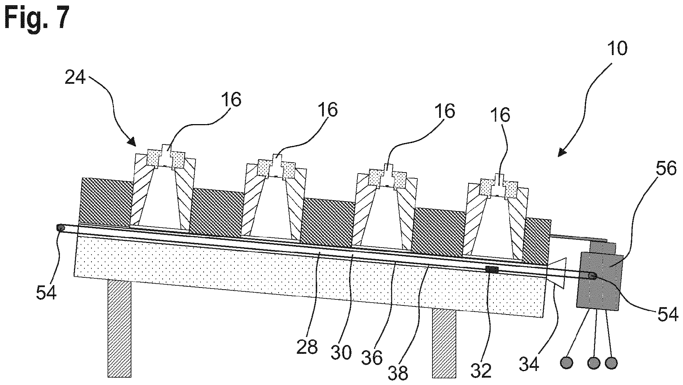

Figur 7 zeigt schematisch eine weitere Ausführungsform eines erfindungsgemäßen Messtisches 10. Der Messtisch weist an beiden Enden eine Umlenkrolle 54 auf, wobei eine Umlenkrolle 54 an dem Gehäuse eines fahrbaren Trägers 56 angeordnet ist. Auf diese Weise kann der Führungsdraht 38 mit der Strahlungsquelle 32 wahlweise geschoben oder gezogen werden. Dabei ist die Strahlungsquelle 32 durch den Führungsdraht 38 beim Einführen in den Messtisch 10 besonders gut abgeschirmt. Zum Führen der Strahlungsquelle 32 kann bei dieser Variante das Führungselement 28 ein zweites Führungsrohr 30 für den Führungsdraht 38 aufweisen.

Ein Verfahren zum Kalibrieren mindestens eines Strahlungsdetektors eines Kugelmesssystems für einen Kernreaktor kann wie folgt ablaufen:
Zunächst wird das Kugelmesssystem auf das Kalibrierprogramm eingestellt. Das Gehäuse 46 mit der Rolle 40 und der Strahlungsquelle 32 wird an einem Ende, insbesondere am unteren Ende, des Messtisches 10 befestigt. Mithilfe der trichterförmigen Öffnung 34 wird der Führungsdraht 38 mit der Strahlungsquelle 32 in das Führungsrohr 30 unterhalb des ersten Messbalkens 24 eingeführt.

Die Strahlungsquelle 32 weist eine bekannte Aktivität auf.

Das Stoppelement, insbesondere ein Anschlagstift, wird in die erste Bohrung 50 gesteckt und die Strahlungsquelle 32 bis zum Anschlag geschoben, zum Beispiel per Handkurbel 42. Dadurch wird die Strahlungsquelle 32 direkt unter dem Strahlungsdetektor 16 positioniert, der sich noch im Messbalken 24 befindet. Es können auch zu Beginn des Kalibrierens alle 36 Anschlagstifte gesetzt werden, die dann nacheinander entfernt werden können. So kann die Strahlungsbelastung für einen Bediener weiter reduziert werden. Bei einem Aufbau mit Umlenkrolle muss der Führungsdraht 38 mit dem zusätzlichen Draht im Messtisch 10 verbunden werden, um den Führungsdraht 38 durch den Messtisch 10 zu ziehen.

Anschließend kann der erste Strahlungsdetektor 16 mittels der bekannten Aktivität der Strahlungsquelle 32 kalibriert werden. Danach werden die weiteren Strahlungsdetektoren 16 im Messbalken 24 nacheinander kalibriert.

Nach der Kalibrierung des letzten Strahlungsdetektors 16 wird der Führungsdraht 38 mit der Strahlungsquelle 32 in das Gehäuse 46 zurückgezogen, bis nur noch das Ende des Führungsdrahtes 38 aus dem Gehäuse 46 herausragt, und auf die Rolle 40 aufgewickelt. In diesem Zustand ist die Strahlungsquelle 32 durch das Gehäuse 46 abgeschirmt.

Nun kann die Rolle 40 umpositioniert werden, sodass die Strahlungsdetektoren 16 im nächsten Messbalken 24 kalibriert werden können.

Mit Abschluss des letzten Messbalkens 24 ist die Kalibrierung beendet. Die Rolle 40 kann abgebaut und verstaut werden.

Alle oben beschriebenen Ausführungsformen können gleichermaßen auch in einem Nuklidaktivierungssystem verwendet werden, bei dem ein oder mehrere Bestrahlungstargets aus Radionuklidvorstufen während des Leistungsbetriebs eines Kernreaktors in den Reaktorkern eingebracht, unter Bildung von medizinisch nutzbaren Radionukliden bestrahlt und die bestrahlten Targets aus dem Reaktorkern ausgetragen werden. Die Aktivität der bestrahlten Targets kann unter Verwendung der Strahlungsdetektoren auf einer Targetplattform gemessen werden, die an die Stelle des oben beschriebenen Messtisches 10 des Kugelmesssystems tritt. Mit Hilfe der Strahlungsdetektoren kann auch zwischen bestrahlten Targets, welche die gewünschten Radionuklide enthalten, und Positionierungstargets unterschieden werden, die nur zur Positionierung der Bestrahlungstargets in Bereichen des Reaktorkerns mit ausreichendem Neutronenfluss verwendet und nicht kommerziell genutzt werden. Die Messröhre 12 kann dann allgemein als Targetröhre bezeichnet werden. Die bestrahlten Targets können aus der Targetplattform in eine Sortier- und/oder Abfüllstation überführt werden.

Die Kalibrierung der Strahlungsdetektoren an der Targetplattform des Nuklidaktivierungssystems kann ebenfalls nach dem oben beschriebenen Verfahren erfolgen.

Das Kugelmesssystem und/oder das Nuklidaktivierungssystem kann in allen Reaktortypen eingesetzt werden, insbesondere in Druckwasserreaktoren und Siedewasserreaktoren sowie in Schwerwassserreaktoren, beispielsweise in CANDU-Reaktoren.

## Patentansprüche

1. Targetplattform (10) zur Verarbeitung von bestrahlten Targets aus einem Kernreaktor, umfassend mindestens eine Targetröhre (12), die sich entlang der Targetplattform (10) erstreckt und die ausgebildet ist, um die Targets aufzunehmen,
**gekennzeichnet durch**
eine Detektoranordnung (14) mit einem oder mehreren Strahlungsdetektoren (16), die über der Targetröhre (12) angeordnet sind, und
eine Kalibriervorrichtung zur Kalibrierung des oder der Strahlungsdetektoren (16) in der Detektoranordnung (14),
die ein Führungselement (28) umfasst, das in der Targetplattform (10) nahe der mindestens einen Targetröhre (12) angeordnet ist und ferner mindestens eine an einem Positionierelement (36) angebrachte Strahlungsquelle (32) umfasst, wobei die Strahlungsquelle (32) derart ausgebildet ist, dass sie mittels des Positionierelements (36) entlang dem Führungselement (28) beweglich ist, um die Strahlungsquelle (32) unterhalb jedes der Strahlungsdetektoren (16) zu positionieren.

2. Targetplattform (10) nach Anspruch 1, **dadurch gekennzeichnet, dass** das Positionierelement (36) ein Führungsdraht (38) ist, welcher Markierungen aufweist, um die Strahlungsquelle (32) in einer definierten Position anzuordnen.

3. Targetplattform (10) nach einem der vorhergehenden Ansprüche, **dadurch gekennzeichnet, dass** die Targetplattform (10) ein Stoppelement aufweist, welches derart angeordnet werden kann, dass die Strahlungsquelle (32) am Stoppelement anstößt.

4. Targetplattform (10) nach einem der vorhergehenden Ansprüche, **dadurch gekennzeichnet, dass** die Strahlungsquelle (32) eine Bohrung (52) aufweist, um die Strahlungsquelle (32) in einer Messposition zu fixieren.

5. Targetplattform (10) nach einem der vorhergehenden Ansprüche, **dadurch gekennzeichnet, dass** das Führungselement (28) ein Führungsrohr (30) ist.

6. Targetplattform (10) nach Anspruch 5, **dadurch gekennzeichnet, dass** das Führungsrohr (30) einen runden oder polygonalen Querschnitt hat.

7. Targetplattform (10) nach einem der Ansprüche 5 oder 6, **dadurch gekennzeichnet, dass** das Führungsrohr (30) eine trichterförmig aufgeweitete Öffnung (34) hat, um ein Einführen der Strahlungsquelle (32) in das Führungsrohr (30) zu erleichtern.

8. Targetplattform (10) nach einem der vorhergehenden Ansprüche, **dadurch gekennzeichnet, dass** die Strahlungsquelle (32) per Hand oder mittels eines Motors bewegbar ist.

9. Targetplattform (10) nach einem der Ansprüche 2 bis 8, **dadurch gekennzeichnet, dass** der Führungsdraht (38) zusammen mit der Strahlungsquelle (32) auf einer Rolle (40) aufwickelbar ist.

10. Targetplattform (10) nach Anspruch 9, **dadurch gekennzeichnet, dass** die Rolle (40) fest oder lösbar an der Targetplattform (10) befestigt ist.

11. Targetplattform (10) nach einem der vorhergehenden Ansprüche, **dadurch gekennzeichnet, dass** die Targetplattform (10) mindestens eine Umlenkrolle (54) aufweist.

12. Verfahren zum Kalibrieren mindestens eines Strahlungsdetektors (16) auf einer Targetplattform (10) gemäß einem der Ansprüche 1 bis 11, wobei das Verfahren die folgenden Schritte umfasst:
- Bereitstellung einer Strahlungsquelle (32), die an einem Positionierelement (36) befestigt ist;
- Einführen der Strahlungsquelle (32) in ein Führungselement (28) in der Targetplattform (10) , insbesondere in einem Messtisch eines Kugelmesssystems, wobei das Führungselement (28) nahe einer Targetröhre (12) angeordnet ist;
- Bewegen der Strahlungsquelle (32) im Führungselement (28) durch Schieben oder Ziehen des Positionierelements (36), bis die Strahlungsquelle (32) in einer Messposition angeordnet ist, in welcher der Strahlungsdetektor (16) die Aktivität der Strahlungsquelle (32) detektiert.

13. Verfahren nach Anspruch 12, **dadurch gekennzeichnet, dass** die Messposition durch ein Stoppelement für die Strahlungsquelle (32) und/oder durch eine oder mehrere Markierungen am Positionierelement (36) definiert wird.

14. Verwendung der Targetplattform (10) gemäß einem der Ansprüche 1 bis 11 für ein Kugelmesssystem und/oder ein Nuklidaktivierungssystem in einem Kernreaktor.

15. Verwendung nach Anspruch 14, **dadurch gekennzeichnet, dass** der Kernreaktor ein Druckwasserreaktor, ein Siedewasserreaktor oder ein Schwerwasserreaktor ist.

## Claims

1. A target platform (10) for processing irradiated targets from a nuclear reactor, comprising
at least one target tube (12) extending along the target platform (10) and shaped to receive the targets, **characterized by** a detector arrangement (14) with one or more radiation detectors (16) arranged above the target tube (12), and
a calibration device for calibrating the radiation detector(s) (16) in the detector arrangement (14),
a guide element (28) that is arranged in the target platform (10) near the at least one target tube (12) and further comprises at least one radiation source (32) mounted on a positioning element (36), the radiation source (32) being designed to be movable along the guide element (28) by means of the positioning element (36) to position the radiation source (32) below each of the radiation detectors (16).

2. A target platform (10) according to Claim 1, **characterized in that** the positioning element (36) is a guide wire (38) which has markings for placing the radiation source (32) in a defined position.

3. A target platform (10) according to any one of the preceding claims, **characterized in that** the target platform (10) comprises a stop element that can be arranged such that the radiation source (32) abuts the stop element.

4. A target platform (10) according to any one of the preceding claims, **characterized in that** the radiation source (32) has a drilled hole (52) for fixing the radiation source (32) in a measurement position.

5. A target platform (10) according to any one of the preceding claims, **characterized in that** the guide element (28) is a guide tube (30).

6. A target platform (10) according to Claim 5, **characterized in that** the guide tube (30) has a round or polygonal cross-section.

7. A target platform (10) according to one of the Claims 5 or 6, **characterized in that** the guide tube (30) has a flared opening (34) to facilitate insertion of the radiation source (32) into the guide tube (30).

8. A target platform (10) according to any one of the preceding claims, **characterized in that** the radiation source (32) is movable by hand or by means of a motor.

9. A target platform (10) according to one of the Claims 2 to 8, **characterized in that** the guide wire (38) can be wound on a reel (40) together with the radiation source (32).

10. A target platform (10) according to Claim 9, **characterized in that** the reel (40) is fixedly or releasably attached to the target platform (10).

11. A target platform (10) according to any one of the preceding claims, **characterized in that** the target platform (10) comprises at least one deflection roller (54).

12. A method of calibrating at least one radiation detector (16) on a target platform (10) according to any one of Claims 1 to 11, in which the procedure comprises the following steps:
- Providing a radiation source (32) attached to a positioning element (36);
- Insertion of the radiation source (32) into a guide element (28) in the target platform (10), in particular in a measuring table of a sphere measurement system, wherein the guide element (28) is arranged close to a target tube (12);
- Moving the radiation source (32) in the guide element (28) by pushing or pulling the positioning element (36) until the radiation source (32) is arranged in a measurement position in which the radiation detector (16) detects the activity of the radiation source (32).

13. Procedure according to Claim 12, **characterized in that** the measurement position is defined by a stop element for the radiation source (32) and/or by one or more markings on the positioning element (36).

14. Use of the target platform (10) according to any one of Claims 1 to 11 for a sphere measurement system and/or a nuclide activation system in a nuclear reactor.

15. Use according to Claim 14, **characterized in that** the nuclear reactor is a pressurized water reactor, a boiling water reactor or a heavy water reactor.

## Revendications

1. Plateforme de cibles (10) destinée au traitement de cibles irradiées provenant d'un réacteur nucléaire, comprenant
au moins un tube de cibles (12) s'étendant le long de la plateforme de cibles (10) et conçu pour accueillir des cibles, **caractérisé par** un système de détection (14) comprenant un ou plusieurs détecteurs de rayonnement (16) disposés au-dessus du tube de cibles (12), et
un dispositif d'étalonnage destiné à étalonner le ou les détecteur(s) de rayonnement (16) du système de détection (14),
un élément de guidage (28) disposé dans la plateforme de cibles (10) à proximité de l'au moins un tube de cibles (12) et comprenant en outre au moins une source de rayonnement (32) montée sur un élément de positionnement (36), la source de rayonnement (32) étant conçue de sorte à être mobile le long de l'élément de guidage (28) au moyen de l'élément de positionnement (36) afin de positionner la source de rayonnement (32) en dessous de chacun des détecteurs de rayonnement (16).

2. Plateforme de cibles (10) selon la revendication 1, **caractérisée en ce que** l'élément de positionnement (36) est un fil de guidage (38) qui comporte des repères pour placer la source de rayonnement (32) dans une position définie.

3. Plateforme de cibles (10) selon l'une des revendications précédentes, **caractérisée en ce que** la plateforme de cibles (10) comporte un élément d'arrêt qui peut être disposé de telle sorte que la source de rayonnement (32) vient en butée contre l'élément d'arrêt.

4. Plateforme de cibles (10) selon l'une des revendications précédentes, **caractérisée en ce que** la source de rayonnement (32) comporte un alésage (52) pour fixer la source de rayonnement (32) dans une position de mesure.

5. Plateforme de cibles (10) selon l'une des revendications précédentes, **caractérisée en ce que** l'élément de guidage (28) est un tube de guidage (30).

6. Plateforme de cibles (10) selon la revendication 5, **caractérisée en ce que** le tube de guidage (30) a une section transversale ronde ou polygonale.

7. Plateforme de cibles (10) selon l'une des revendications 5 ou 6, **caractérisée en ce que** le tube de guidage (30) présente une ouverture évasée en forme d'entonnoir (34) pour faciliter l'insertion de la source de rayonnement (32) dans le tube de guidage (30).

8. Plateforme de cibles (10) selon l'une des revendications précédentes, **caractérisée en ce que** la source de rayonnement (32) peur être déplacée à la main ou au moyen d'un moteur.

9. Plateforme de cibles (10) selon l'une des revendications 2 à 8, **caractérisée en ce que** le fil de guidage (38) peut être enroulé sur une bobine (40) avec la source de rayonnement (32).

10. Plateforme de cibles (10) selon la revendication 9, **caractérisée en ce que** la bobine (40) est attachée de manière fixe ou amovible à la plateforme de cibles (10).

11. Plateforme de cibles (10) selon l'une des revendications précédentes, **caractérisée en ce que** la plateforme de cibles (10) comporte au moins une bobine de déviation (54).

12. Procédé d'étalonnage d'au moins un détecteur de rayonnement (16) sur une plateforme de cibles (10) selon l'une des revendications 1 à 11, le procédé comprenant les étapes suivantes :
- fourniture d'une source de rayonnement (32) fixée à un élément de positionnement (36) ;
- insertion de la source de rayonnement (32) dans un élément de guidage (28) dans la plateforme de cibles (10), en particulier dans une table de mesure d'un système de mesure à billes, l'élément de guidage (28) étant disposé à proximité d'un tube de cibles (12) ;
- déplacement de la source de rayonnement (32) dans l'élément de guidage (28) en poussant ou en tirant l'élément de positionnement (36) jusqu'à ce que la source de rayonnement (32) se trouve dans une position de mesure dans laquelle le détecteur de rayonnement (16) détecte l'activité de la source de rayonnement (32).

13. Procédé selon la revendication 12, **caractérisé en ce que** la position de mesure est définie par un élément d'arrêt de la source de rayonnement (32) et/ou par un ou plusieurs repères au niveau de l'élément de positionnement (36).

14. Utilisation de la plateforme de cibles (10) selon l'une des revendications 1 à 11 pour un système de mesure à billes et/ou un système d'activation de nucléides dans un réacteur nucléaire.

15. Utilisation selon la revendication 14, **caractérisée en ce que** le réacteur nucléaire est un réacteur à eau pressurisée, un réacteur à eau bouillante ou un réacteur à eau lourde.
